Europäisches Patentamt

European Patent Office

Office européen des brevets

(19)

(11) Numéro de publication : **0 363 244 B1**

(12) **FASCICULE DE BREVET EUROPEEN**

(45) Date de publication du fascicule du brevet :
**10.03.93 Bulletin 93/10**

(51) Int. Cl.$^5$ : **G05D 1/08**

(21) Numéro de dépôt : **89402568.3**

(22) Date de dépôt : **19.09.89**

(54) **Sytème de contrôle actif selon trois axes de l'attitude d'un satellite géostationnaire.**

(30) Priorité : **06.10.88 FR 8813122**

(43) Date de publication de la demande :
**11.04.90 Bulletin 90/15**

(45) Mention de la délivrance du brevet :
**10.03.93 Bulletin 93/10**

(84) Etats contractants désignés :
**DE ES GB IT NL SE**

(56) Documents cités :
**EP-A- 0 174 715
EP-A- 0 209 429
EP-A- 0 251 692
EP-A- 0 260 957
FR-A- 2 601 159**

(73) Titulaire : **AEROSPATIALE Société Nationale Industrielle
37, Boulevard de Montmorency
F-75781 Paris Cédex 16 (FR)**

(72) Inventeur : **Maute, Patrick Aimé Alexandre
10 chemin de Cambarnier Nord
F-06560 Valbonne (FR)**

(74) Mandataire : **Rinuy, Santarelli
14, avenue de la Grande Armée
F-75017 Paris (FR)**

Jouve, 18, rue Saint-Denis, 75001 PARIS

**Description**

L'invention concerne le contrôle de l'attitude d'un satellite géostationnaire stabilisé selon trois axes.

On associe en pratique à un tel satellite un repère orthonormé direct (X,Y,Z) dont l'axe X (ou axe Ouest-Est) est tangent en principe à l'orbite, et Z, ou axe géocentrique, est dirigé vers la Terre. Le troisième axe, Y, ou axe Nord-Sud, est perpendiculaire aux axes X et Z.

La stabilisation du satellite selon ces trois axes suppose un contrôle des trois types de dérives : le tangage autour de l'axe Nord-Sud Y, le roulis autour de l'axe X, Est-Ouest, et le lacet autour de l'axe géocentrique Z.

A cet effet, l'architecture classique d'un satellite géostationnaire comporte un détecteur terrestre (en pratique de type infra-rouge), adapté à mesurer le tangage et le roulis, éventuellement combiné à un ou plusieurs détecteur(s) solaire(s). L'angle de lacet est contrôlé passivement à l'aide d'une roue à inertie d'axe de rotation perpendiculaire à l'axe géocentrique, en pratique parallèle à l'axe Y.

La précision à laquelle parvient un tel système connu est couramment de l'ordre de 0,1 à 0,5 degré.

On peut distinguer principalement quatre modes de fonctionnement de ce système de contrôle d'attitude :

1- le mode normal correspondant au contrôle d'attitude en supposant l'orbite correcte ;

2- le mode de maintien à poste (en anglais "station keeping") correspondant au contrôle d'attitude pendant les manoeuvres de correction d'orbite ;

3- le mode survie dans lequel, suite à un incident de contrôle, le satellite pointe un axe du plan XZ vers le soleil, configuration à partir de laquelle on veut ramener le satellite dans son attitude normale ; et

4- le mode manoeuvre d'apogée où le contrôle d'attitude vise à orienter avec précision le satellite au moment où on commande les poussées d'apogée pour faire passer le satellite d'une orbite de transfert avec stabilisation 3-axes à son orbite géostationnaire de service.

En pratique, lors des manoeuvres de maintien à poste, les éventuels couples parasites, dûs au mésalignement des tuyères de correction d'orbite par rapport aux axes du satellite, sont de trois ordres de grandeur plus importants que les couples solaires subis en mode normal, et la rigidité gyroscopique associé aux roues d'inertie contrôlant passivement le lacet peut être insuffisante.

D'autre part la précision du contrôle de lacet est critique lors du maintien à poste car l'amplitude des manoeuvres de correction d'orbite selon l'axe Nord-Sud est de trois ordres de grandeur plus grande que celle des manoeuvres de correction d'orbite selon l'axe Est-Ouest, de sort qu'une faible erreur sur l'angle de lacet, par exemple de quelques 1/10 de dégré, lors des manoeuvres Nord-Sud induit des manoeuvres parasites par rapport à l'axe Est-Ouest qui peuvent être du même ordre de grandeur que les manoeuvres normales de correction d'orbite à effectuer autour de cet axe Est-Ouest. Cela peut perturber sensiblement le maintien à poste du satellite.

Quant au mode survie, le retour à une stabilisation 3-axes sur l'orbite ne peut s'entamer que dans une configuration dans laquelle le Soleil, la Terre et le satellite ne sont pas alignés, les directions Satellite-Terre et Satellite-Soleil étant de préférence perpendiculaires (à 6 heures et à 18 heures), ce qui peut conduire à des maintiens en mode survie (et des interruptions de la mission du satellite) durant plusieurs heures : cela apparaît de plus en plus incompatible avec les contraintes des missions que l'on souhaite confier aux satellites.

L'invention vise à pallier les inconvénients précités grâce à un contrôle d'attitude actif selon les trois axes.

Pour cela, elle fait intervenir un détecteur stellaire orienté vers le Nord, en pratique monté sur la face Nord du satellite.

Dans son principe la mise en oeuvre d'un détecteur stellaire est connue en soi.

Ainsi le document EP-A-0 174 715 de MITSUBISHI propose déjà l'utilisation d'un détecteur stellaire, par exemple destiné à observer l'Etoile Polaire, mais seul le mode normal est envisagé et, si ce détecteur stellaire est destiné à permettre la mesure de l'angle de lacet, aucun procédé de contrôle d'attitude à partir de cette mesure n'est détaillé ni suggéré. Enfin, l'intervention du sol est nécessaire pour télécharger périodiquement au satellite les paramètres de l'orbite associée et calculer les trois angles d'attitude de ce satellite.

Le document FR-2 522 614 du C.N.E.S. décrit bien une méthode de pointage stellaire, mais celle-ci est associée à un type de plateforme spécifique entièrement différent d'une plate-forme géostationnaire classique. Elle suppose le partage de la plate-forme en deux modules (module charge utile et module de service), chacun d'entre eux étant stabilisé de façon différente. Le module de service est stabilisé inertiellement, le module charge utile étant pointé vers la Terre.

Enfin, le document FR-2 532 911 du C.N.E.S. décrit un procédé pour la manoeuvre d'apogée d'un satellite géostationnaire qui utilise un détecteur stellaire selon un procédé qui nécessite cependant un agencement inhabituel du satellite présentant de sérieux inconvénients : la tuyère d'apogée est inclinée d'un angle égal à la déclinaison de la manoeuvre. Toutes les impulsions à donner doivent donc être effectuées avec la même orientation (ce qui n'est pas le cas dans la pratique). De plus, l'inclinaison donnée à la tuyère ne permet l'équilibrage des couples perturbateurs que pour un coefficient donnée de remplissage des réservoirs d'ergol. Au fur et à mesure qu'ils se vident les couples perturbateurs augmentent.

Il apparaît ainsi que les systèmes connus de contrôle d'attitude du type utilisant un détecteur stellaire pointé vers l'Etoile Polaire, exigent une structure très particulière et contraignante du satellite et/ou sont très complexes. En outre, la prise en compte des signaux du détecteur stellaire est tout à fait intermittente, ne correspondant en pratique qu'à seul un mode de fonctionnement du satellite.

Or, un détecteur stellaire est un élément assez lourd (3 à 10 Kg), pour lequels il faut généralement une redondance pour des raisons de sécurité, ce qui se traduit par une pénalité non négligeable du point de vue masse embarquée ; compte tenu de la courte durée d'utilisation de ce détecteur par rapport à la durée de vie du satellite, l'inconvénient de sa masse est souvent jugé déterminant et on renonce souvent à l'intégrer à un système de contrôle d'attitude.

L'invention vise à pallier ces inconvénients en permettant un contrôle actif d'attitude selon les trois axes, qui soit à la fois précis et permanent tout en minimisant la complexité (la masse et les risques de pannes) du système de contrôle d'attitude associé.

Elle propose à cet effet un système de contrôle de l'attitude d'un satellite géostationnaire stabilisé selon un axe Est-Ouest, un axe Nord-Sud et un axe géocentrique, ces axes étant perpendiculaires les uns aux autres, comprenant une pluralité de détecteurs comportant au moins un détecteur terrestre destiné à être orienté vers la Terre et un détecteur stellaire orienté vers le Nord selon l'axe Nord-Sud, et une pluralité d'actionneurs, caractérisé en ce qu'il comporte :

- une chaîne de traitement pour chacun au moins des modes normal (I) et de maintien à poste (II), chaque chaîne de traitement étant adaptée à être connectée aux détecteurs, d'une part, et à une partie au moins des actionneurs, d'autre part, et comportant un module de prétraitement adapté à déterminer pour chaque axe, désigné par son indice $i$, un écart $\varepsilon_i$, par rapport à cet axe $i$, entre un angle de mesure déterminé à partir des signaux de la pluralité de détecteurs et un angle de référence prédéterminé ainsi qu'un module de contrôle et de correction adapté à déterminer pour chaque axe repéré par l'indice $i$, un couple de correction de la forme :

$$C = k_i. \varepsilon_i + H_i. \overset{\circ}{\varepsilon_i}$$

où $k_i$ et $h_i$ sont des paramètres propres à chaque axe et à chaque ligne de traitement, et où $\overset{\circ}{\varepsilon}$ est la vitesse de variation de cet écart angulaire (parfois notée $\omega$).

- un élément de mesure de vitesse adapté à mesurer la vitesse angulaire $\overset{\circ}{\varepsilon_i}$ et à être connecté au moins au module de contrôle et de correction de la chaîne de traitement (II) du mode maintien à poste,

- et une unité de sélection de mode adapté à commander un sélecteur d'entrée, connectant les détecteurs à l'une choisie des lignes de traitement, et un sélecteur de sortie adapté à connecter cette ligne de traitement à au moins un actionneur.

Le système utilise donc, pour un satellite de configuration par ailleurs classique (notamment du point de vue tuyères et roues), un détecteur terrestre, un détecteur stellaire visant l'Etoile Polaire, dont l'axe sensible est parallèle à l'axe Y du satellite et orienté vers le Nord, combinés éventuellement avec trois détecteurs solaires à grand champ de vue.

Il permet un contrôle du lacet avec une précision de l'ordre de 0.02 degré en mode normal et en mode de maintien à poste.

Les avantages ainsi obtenus sont notamment :
- un gain en précision, qui trouve une application dans certains types de missions nouvelles (liaisons inter-satellites, observations de la terre et météo) ;
- un gain de sécurité, permis par la mesure permanente des trois axes ;
- une simplicité de mise en oeuvre, puisque la Polaire reste en permanence dans le champ du détecteur stellaire et qu'aucun logiciel complexe de reconnaissance d'étoiles n'est nécessaire.

Selon des dispositions préférées, l'écart angulaire $\varepsilon_z$ autour de l'axe Z, appelé écart de lacet, est mesuré par différence de la mesure $\underline{x}$ du détecteur stellaire (P) dans le plan des axes X et Y et d'une valeur $\underline{x_o}$ représentative de la position prévue de l'Etoile Polaire dans le champ du vision du détecteur stellaire en supposant parfaite l'attitude du satellite :

$$\varepsilon_z = X - X_o$$

Des objets, caractéristiques et avantages de l'invention ressortent de la description qui suit, donnée à titre d'exemple illustratif non limitatif en regard des dessins annexés sur lesquels :
- la figure 1 est une vue schématique d'un satellite géostationnaire équipé d'un système de contrôle d'attitude conforme à l'invention ;
- la figure 2 est un schéma fonctionnel simplifié de ce système de contrôle d'attitude ;
- la figure 3 est un schéma simplifié explicitant le contrôle d'attitude en mode de manoeuvre d'apogée ; et
- la figure 4 est un schéma simplifié explicitant le retour en contrôle d'attitude en mode de survie ;

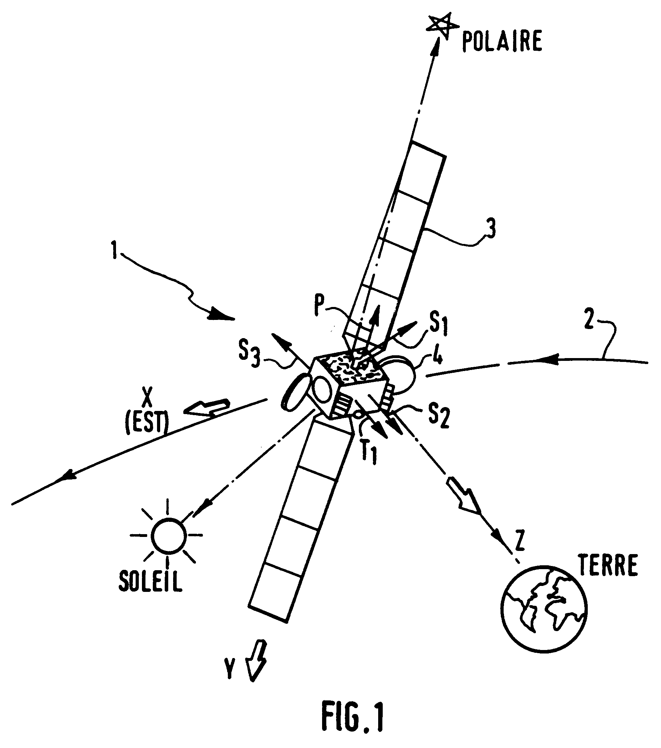

La figure 1 représente de façon schématique un satellite 1 décrivant une orbite 2 autour de la Terre.

De façon classique, au satellite 1 est associé un repère de référence X Y Z dont l'axe X est tangent à l'orbite 2, et orienté dans le sens dans lequel l'orbite est parcourue (d'Ouest en Est), et l'axe Z est dirigé vers la Terre ; le troisième axe Y est parallèle à une direction Nord-Sud.

Le satellite comporte une plate-forme portant des panneaux solaires 3, des réflecteurs 4 et des tuyères de propulsion de tout type connu approprié.

De façon également connue la plate-forme de ce satellite comporte au moins un capteur terrestre orienté vers la Terre et schématisé en $T_1$ ainsi qu'une pluralité de détecteurs solaires répartis dans un plan parallèle au plan des axes X et Z et venant successivement en regard du Soleil au fur et à mesure que le satellite décrit son orbite. Différentes configurations sont connues ; à titre d'exemple, les détecteurs solaires sont ici au nombre de trois, $S_1$, $S_2$, et $S_3$, disposés l'un $S_2$ sur la face tournée vers la Terre et les autrres, $S_1$ et $S_3$, sur les arêtes opposées à cette face. En pratique, pour une meilleure couverture solaire, on peut préférer une architecture à quatre détecteurs solaires.

Selon l'invention, la plate-forme de ce satellite est également munie, ici sur sa face Nord (à l'opposé de l'axe Y), d'un détecteur stellaire P fixe, de tout type approprié, orienté selon l'axe Sud-Nord. Il s'agit par exemple d'un détecteur choisi dans la gamme SODERN ou GALILEO.

Ainsi qu'on le sait, il existe actuellement des différences importantes entre les trois types précités de détecteurs, même s'ils sont tous des détecteurs optiques.

Tout d'abord les détecteurs solaires $S_1$ à $S_3$, terrestre $T_1$, et stellaire P se classent respectivement par ordre décroissant du point de vue puissance de rayonnement incident.

En outre ces détecteurs connus sont sensibles à des gammes différentes de rayonnement : les détecteurs terrestres sont sensibles au rayonnement infrarouge de la Terre, les détecteurs solaires sont formés de cellules photo-électriques et les détecteurs stellaires sont à base de barrettes ou de réseaux CCD (en anglais "Charge Coupled Device") à deux dimensions.

Le choix de l'Etoile Polaire s'explique du fait qu'elle est la seule étoile de sa magnitude à être toujours dans le champ de vision d'un détecteur stellaire monté de façon fixe sur la face Nord d'un satellite et sa reconnaissance n'exige pas de logiciel sophistiqué.

Les détecteurs terrestre $T_1$, solaires $S_1$ à $S_3$ et stellaire P permettent à tout instant de relever l'orientation angulaire de la Terre, du Soleil et de l'Etoile Polaire, respectivement, dans le repère lié au satellite.

La principale originalité du système par rapport à l'art antérieur réside non seulement dans la présence du détecteur stellaire P en face Nord mais surtout dans ses différentes procédures de mise en oeuvre adaptées aux divers types de mode, et donc dans des chaînes de traitement associées à ces divers modes.

Les procédures de mise en oeuvre du détecteur stellaire peuvent couvrir la quasi-totalité de la durée de vie du satellite :

I- le mode normal : contrôle du roulis et du lacet, détection de panne ;

II- le mode de maintien à poste ;

III - le mode poussée d'apogée : mesure du lacet ;

IV- le mode survie : minimisation des durées d'interruption de la mission (moins de 30 minutes).

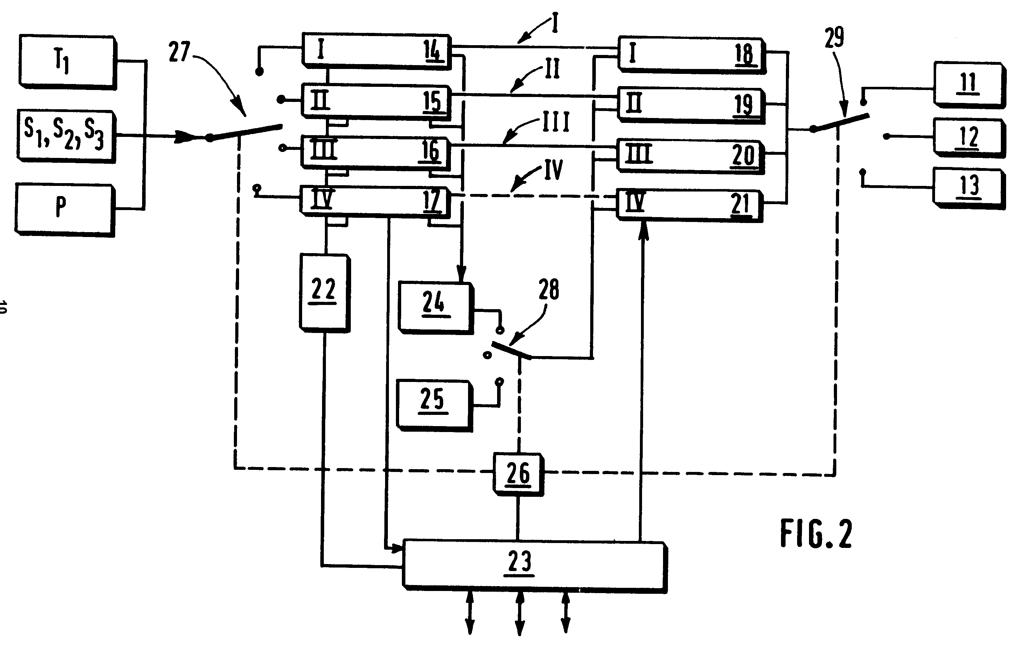

A chacun de ces modes est associé une chaîne de traitement particulière, désignée à la figure 2 par le chiffre romain du mode considéré I, II, III ou IV.

Sur cette figure 2 sont schématisés à gauche l'ensemble des détecteurs utilisés pour le contrôle d'attitude, à savoir le détecteur stellaire P tourné vers le Nord et donc ayant l'Etoile Polaire dans son champ de vision, les détecteurs solaires S1 à S3, et le détecteur terrestre T1.

Ces divers détecteurs délivrent à leur sortie des signaux qui sont appliqués aux chaînes de traitement destinées à déterminer en conséquence l'amplitude des manoeuvres de correction à faire appliquer par des actionneurs de tout type connu approprié (schématisés à droite) qui peuvent être principalement de trois types :

- des roues à réaction 11 (c'est-à-dire des roues dont le sens de rotation dépend des corrections à apporter) généralement réparties selon les trois axes ;

- des roues d'inertie 12 (c'est-à-dire des roues à rotation permanente rapide, dont les variations de vitesse dépendent des corrections à effectuer) généralement réparties selon les trois axes ;

- ou des tuyères 13.

Chacune des chaînes de traitement I à IV comportent un module de prétraitement 14, 15, 16 ou 17 suivi d'un module de contrôle et de correction 18, 19, 20 ou 21.

Une unité 22 de référence-lacet est connectée à chacun des modules de prétraitement 14 à 17 et est adaptée à estimer à tout instant la position du satellite dans un repère inertiel prédéterminé. Cette unité 22 contient un modèle d'évolution de la position de la Polaire, et est connecté à une unité 23 de télémétrie en sorte que les paramètres de ce modèle soient périodiquement rafraîchis en fonction d'informations reçues du sol.

Les modules 18 à 20 reçoivent, outre les signaux élaborés par les modules correspondant de prétraitement 14 à 16, des signaux de vitesse émis, soit par un module 24 de modélisation de la dynamique du satellite recevant les signaux des détecteurs, soit par des gyromètres 25.

En pratique, en mode survie, le signal de sortie du module 17 est transmis à l'unité de télémétrie pour envoi au sol tandis que l'entrée du module de contrôle et de correction 21 est connectée à cette même unité de télémétrie pour réception d'ordres de correction calculés au sol.

Une unité de sélection 26, commandée en pratique par le sol au travers de l'unité de télémétrie 23, commande des sélecteurs de mode 27, 28 et 29 liés entre eux en sorte de corréler le choix d'un mode (par le sélecteur de mode 27), au choix du mode de calcul, le cas échéant, de la vitesse de roulis, lacet ou tangage (par le sélecteur de mode 28) et la sélection de la combinaison des actionneurs 11, 12 ou 13 à mettre en oeuvre selon les divers axes de correction selon les signaux de commande élaborés par les modules 18 à 21.

En mode I normal, les trois angles d'attitude du satellite, y compris le lacet, sont contrôlés en permanence.

Le contrôle utilise directement les mesures des détecteurs suivants :
- roulis et tangage : détecteur Terre
- lacet : détecteur stellaire

Pour le contrôle du roulis et du tangage, les signaux d'erreur du détecteur terrestre sont utilisables directement sans prétraitement dans les modules 14 à 17.

Pour le contrôle de l'angle de lacet, les opérations suivantes sont nécessaires :
- à partir des éphémérides élaborés pour le satellite par l'unité 22, on calcule la position du satellite dans un repère inertiel ;
- puis on calcule dans cette même unité 22 les coordonnées théoriques $X_o$, $Z_o$ de l'Etoile Polaire dans le champ de vue du détecteur stellaire, pour cette position en supposant parfaite l'attitude du satellite (roulis, tangage et lacet nuls) ;
- on calcule dans le module 14, 15 ou 16 un signal d'erreur en lacet $\varepsilon_z = x - x_o$ où x est la position réelle, mesurée parallèlement à l'axe X , de la Polaire dans le champ de vue à deux dimensions du détecteur stellaire ;
- on calcule en 18, 19 ou 20 l'amplitude de contrôle en lacet, à partir de ce signal d'erreur et éventuellement de la vitesse angulaire en lacet $\overset{\circ}{\varepsilon}_z$ : typiquement,

$$C_z = k_z.\varepsilon_z + h_z.\overset{\circ}{\varepsilon}_z$$

visant à annuler l'écart $\varepsilon_z$.

D'une façon générale, ce type de loi de contrôle $C_i = k_i.\varepsilon_i + h_i.\overset{\circ}{\varepsilon}_i$ est utilisé pour chacun des axes à contrôler X, Y, et Z, dans chacun des modules 18 à 20, avec des coefficients $h_i$ et $k_i$ étant prédéterminés pour chaque axe et pour chaque mode.

Lorsque l'on souhaite prendre en compte la vitesse angulaire $\overset{\circ}{\varepsilon}_i$ ($h_i \neq 0$), lors notamment de manoeuvres importantes, ce qui n'est pas le cas en pratique du mode normal, celle-ci peut être soit mesurée par les gyromètres 25 soit obtenue en 24 par dérivation par rapport au temps, à l'aide des mesures des détecteurs et d'un modèle de la dynamique du satellite de tout type approprié.

L'architecture des détecteurs proposée par l'invention offre une sécurité accrue.

Il est possible en effet en vérifiant (en 18, 19, 20 ou 21) la cohérence des mesures détecteurs entre elles :
- roulis : détecteurs terrestre et stellaire,
- tangage : détecteurs terrestre et solaire,
- lacet : détecteurs stellaire et solaire, de détecter et d'identifier le type de panne pouvant survenir en mode normal.

Si les mesures sont cohérentes, on est en présence d'une panne dynamique, il faut activer un actionnement de secours (souvent une roue redondante) ou passer en acquisition solaire (mode survie).

Si les mesures se sont pas cohérentes, on est en présence d'une panne de détecteur : dès son identification, il faut activer le détecteur redondant prévu en secours et effectuer une réacquisition Terre à l'aide de la roue associée appropriée.

Pour la simplicité du dessin on n'a pas fait figurer les lignes de liaison par lesquelles transitent ces signaux résultant de la reconnaissance d'une panne.

En mode de maintien à poste, la mesure de l'angle de lacet est impérative ; elle est fournie directement par le détecteur stellaire. Une autre loi de calcul détermine les couples de correction, avec une même forme que précédemment mais avec des paramètres différents (les couples de correction peuvent être de 2 à 3 ordres de grandeur supérieurs à ceux du mode normal, et peuvent aller jusqu'à $10^{-2}$ N.m).

L'avantage de la méthode par rapport à l'état de l'art est qu'elle permet d'éviter l'utilisation d'un gyroscope intégrateur en lacet (d'ou gain de fiabilité, de simplicité de mise en oeuvre et de précision sans calibration) ou l'utilisation de détecteurs solaires pour le lacet, ce qui introduit des contraintes sur les heures de manoeuvre possibles et induit une pénalité de consommation d'ergols supplémentaires.

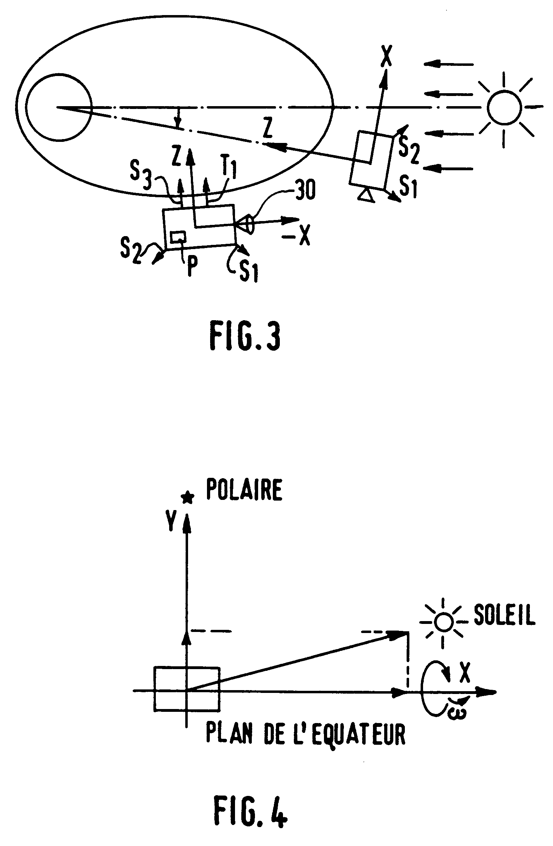

En mode de manoeuvre apogée, (sous réserve que le satellite ait été stabilisé 3-axes sur son orbite de tranfert) le détecteur stellaire permet là aussi de se passer d'un gyroscope intégrateur en lacet (d'ou un gain de fiabilité et de précision, en réduisant la complexité). La procédure de mise en oeuvre est décrite sur la figure 3 :
1°) Acquisition Terre classique par le détecteur terrestre, le satellite effectuant un mouvement de balayage conique contrôlé par les détecteurs solaires S1 et S2.
2°) Le contrôle du lacet jusqu'au moment de, et pendant, la manoeuvre d'apogée est assuré par le détecteur stellaire. Avant mise à feu du moteur d'apogée 30 l'attitude du satellite peut être affinée par télécommande du sol, par affichage d'un biais (écart) convenable par rapport à l'étoile visée. Il a été vérifié que pour des inclinaisons de l'orbite de transfert usuelles (jusqu'à 30 degrés), il y a toujours au moins une étoile de magnitude inférieure à 6 dans le champ du détecteur.

Le retour du satellite en mode normal depuis le mode survie dans lequel il est pointé soleil ne peut se faire avec une architecture détecteurs classique, ainsi qu'on l'a vu ci-dessus, que si la Terre, le Soleil et le Satellite ne sont pas alignés, les heures idéales, du point de vue précision de l'attitude, étant celles où la Terre, la Satellite et le Soleil sont en quadrature (6 heures-18 heures).

Cette contrainte disparaît si on utilise le détecteur stellaire.

Deux procédures sont possibles à cet effet.

1°) Soit dans un premier temps il y a récupération grossière de l'attitude (précision de l'ordre de quelques degrés) puis amélioration du lacet par affichage du biais convenable sur le détecteur stellaire.

2°) Soit directement, en une seule étape, par balayage d'une suite d'étoiles par rotation $\vec{\omega}$ autour de l'axe défini par la projection de la direction du Soleil dans le plan de l'Equateur (voir figure 4), puis rotation en tangage autour de la direction définie par la Polaire pour réacquérir la Terre.

## Revendications

1. Système de contrôle de l'attitude d'un satellite géostationnaire stabilisé selon un axe Est-Ouest, un axe Nord-Sud et un axe géocentrique, ces axes étant perpendiculaires les uns aux autres, comprenant une pluralité de détecteurs ($T_1$, $S_1$, $S_2$, $S_3$, P) comportant au moins un détecteur terrestre ($T_1$) destiné à être orienté vers la Terre et un détecteur stellaire orienté vers le Nord selon l'axe Nord-Sud, et une pluralité d'actionneurs, caractérisé en ce qu'il comporte :
   - une chaîne de traitement (14 + 18 ; 15 + 19 ; 16 + 20) pour chacun au moins des modes normal (I) et de maintien à poste (II), chaque chaîne de traitement étant adaptée à être connectée aux détecteurs, d'une part, et à une partie au moins des actionneurs (11, 12, 13), d'autre part, et comportant un module de prétraitement (14-16) adapté à déterminer pour chaque axe, désigné par son indice $i$, un écart angulaire $\varepsilon_i$, par rapport à cet axe $i$, entre un angle de mesure déterminé à partir des signaux de la pluralité de détecteurs et un angle de référence prédéterminé ainsi qu'un module de contrôle et de correction (18, 20) adapté à déterminer pour chaque axe repéré par l'indice $i$, un couple de correction de la forme :
$$C = k_i.\varepsilon_i + h_i.\overset{\circ}{\varepsilon}_i$$
   où $k_i$ et $h_i$ sont des paramètres propres à chaque axe et à chaque ligne de traitement, et où $\overset{\circ}{\varepsilon}$ est la vitesse de variation de cet écart angulaire,
   - un élément de mesure de vitesse (24, 25) adapté à mesurer la vitesse angulaire $\overset{\circ}{\varepsilon}_i$ et à

être connecté au moins au module de contrôle et de correction (19) de la chaîne de traitement (II) du mode maintien à poste,
   - et une unité de sélection de mode (26) adapté à commander un sélecteur d'entrée (27), connectant les détecteurs à l'une choisie des lignes de traitement, et un sélecteur de sortie (29) adapté à connecter cette ligne de traitement à au moins un actionneur.

2. Système selon la revendication 1, caractérisé en ce que l'écart angulaire $\varepsilon_z$ autour de l'axe Z, appelé écart de lacet, est mesuré par différence de la mesure $\overline{x}$ du détecteur stellaire (P) dans le plan des axes $\overline{X}$ et Y et d'une valeur $x_0$ représentative de la position prévue de l'Etoile Polaire dans le champ de vision du détecteur stellaire en supposant parfaite l'attitude du satellite :
$$\varepsilon_z = x - x_0$$

3. Système selon la revendication 2, caractérisé en ce que les écarts angulaires $\varepsilon_x$ et $\varepsilon_y$ associés aux axes X et Y sont pris égaux à la mesure du détecteur terrestre ($T_1$).

4. Système selon l'une quelconque des revendications 1 à 3, caractérisé en ce que la pluralité de détecteurs comprend des détecteurs solaires ($S_1$-$S_3$) et une ligne de traitement (IV) est associée au mode survie du satellite, adaptée à être connectée aux détecteurs terrestre, solaires et stellaire.

5. Système selon l'une quelconque des revendications 1 à 4, caractérisé en ce qu'une ligne de traitement (III) est associé au mode de maintien à poste, reliée au moins aux détecteurs terrestre et stellaire, et comportant un module de contrôle et de correction (20) adapté à déterminer des couples de correction selon la formule :
$$C^{III}_i = k^{III}_i.\varepsilon_i + h^{III}_i.\overset{\circ}{\varepsilon}_i$$

6. Système selon l'une quelconque des revendications 1 à 5, caractérisé en ce qu'il comporte deux éléments de mesure de vitesse, à savoir un ensemble (25) de gyromètres, et un module (24) de modèlisation de la dynamique du satellite, dont une entrée est connectée au moins indirectement aux détecteurs, un sélecteur intermédiaire (28), lié aux premier et second sétecteurs (27, 29) étant destiné pour chaque mode du satellite, à connecter le module de contrôle et de correction de la ligne de traitement associée à ce mode à la sortie d'au plus un de ces éléments.

7. Système selon l'une quelconque des revendications 1 à 6, caractérisé en ce que la pluralité des détecteurs, comprend des détecteurs solaires ($S_1$ à $S_3$) et les chaînes de traitement sont connectées à cette pluralité de détecteurs en sorte de pouvoir mesurer, le roulis à la fois par des détecteurs terrestre et stellaire, le tangage à la fois par les détecteurs terrestre et solaire, et le lacet à la fois par les détecteurs solaires et stellaires.

**Patentansprüche**

1. Fluglagemonitorsystem eines geostationären Satelliten, der gemäß einer Achse Ost-West, einer Achse Nord-Süd und einer geozentrischen Achse stabilisiert ist, wobei diese Achsen zueinander senkrecht sind, das eine Vielzahl von Detektoren ($T_1$, $S_1$, $S_2$, $S_3$, P), die wenigstens einen terrestrischen Detektor ($T_1$), welcher bestimmt ist, um gegen die Erde gerichtet zu sein, und einen Sterndetektor, welcher gegen den Norden gemäß der Achse Nord-Süd gerichtet ist, aufweisen, und eine Vielzahl von Betätigungsgeräten umfaßt, **dadurch gekennzeichnet**, daß es umfaßt:
   - eine Verarbeitungskette (14 + 18; 15 + 19; 16 + 20) für jeden wenigstens des Eigenschwingungsmodus (I) und Lagestabilitätsmodus (II), wobei jede Verarbeitungskette geeignet ist, mit den Detektoren einerseits und einem Teil wenigstens der Betätigungsgeräte (11, 12, 13) andererseits verbunden zu sein, und ein Vorverarbeitungsmodul (14-16) aufweisend, das geeignet ist, für jede durch ihren Index $i$ gekennzeichnete Achse einen Phasenwinkel $\varepsilon_i$ in Bezug auf diese Achse $i$ zwischen einem aus den Signalen der Vielzahl von Detektoren bestimmten Messungswinkel und einem Vergleichswinkel zu bestimmen, der wie ein Steuerungs- und Korrekturmodul (18, 20) vorbestimmt ist, welches geeignet ist, für jede durch den Index $i$ markierte Achse ein Korrekturmoment der Form zu bestimmen:
$$C = k_i \cdot \varepsilon_i + h_i \cdot \xi_i,$$
   wobei $k_i$ und $h_i$ für jede Achse und jede Verarbeitungslinie charakteristische Parameter sind und wobei $\xi$ die Veränderungsgeschwindigkeit dieses Phasenwinkels darstellt,
   - ein Geschwindigkeitsmeßelement (24, 25), das geeignet ist, die Winkelgeschwindigkeit $\xi_i$ zu messen und mit wenigstens dem Steuerungs- und Korrekturmodul (19) der Verarbeitungskette (II) der Lagestabilität verbunden zu sein,
   - und eine Auswahlmoduseinheit (26), die geeignet ist, einen Eingangswähler (27), welcher die Detektoren mit der einen Ausgewählten der Verarbeitungslinien verbindet, und einen Ausgangswähler (29) zu betätigen, welcher geeignet ist, diese Verarbeitungslinie mit wenigstens einem Betätigungsgerät zu verbinden.

2. System nach Anspruch 1, dadurch gekennzeichnet, daß der Abweichungsgieren genannte Phasenwinkel $\varepsilon_z$ um die Achse Z durch die Differenz der Messung $\underline{x}$ des Sterndetektors (P) in der Ebene der Achsen X und Y und eines zu der vorhergesehenen Stellung des Polarsternes im Blickfeld des Sterndetektors repräsentativen Wertes $\underline{x_0}$ bei vollständiger Annahme der Fluglage des Satelliten:
$$\varepsilon_z = x - x_0.$$

3. System nach Anspruch 2, dadurch gekennzeichnet, daß die den Achsen X und Y zugeordneten Phasenwinkel $\varepsilon_x$ und $\varepsilon_y$ auf die Messung des terrestrischen Detektors ($T_1$) gleich genommen sind.

4. System nach einem der Ansprüche 1 bis 3, dadurch gekennzeichnet, daß die Vielzahl von Detektoren Sonnendetektoren ($S_1$-$S_3$) umfaßt und eine Verarbeitungslinie (IV) einem Satellitenüberlebensmodus zugeordnet ist, der geeignet ist, mit terrestrischem, Sonnen- und Sterndetektoren verbunden zu sein.

5. System nach einem der Ansprüche 1 bis 4, dadurch gekennzeichnet, daß eine Verarbeitungslinie (III) dem Lagestabilitätsmodus zugeordnet ist, die wenigstens an den terrestrischen und Sterndetektor angeschlossen ist und ein Steuerungs- und Korrekturmodul (20) aufweist, welches geeignet ist, Korrekturmomente nach der Formel zu bestimmen:
$$C^{III}_i = k^{III}_i \cdot \varepsilon_i + h^{III}_i \cdot \xi_i.$$

6. System nach einem der Ansprüche 1 bis 5, dadurch gekennzeichnet, daß es zwei Geschwindigkeitsmeßelemente, um eine Gyrometergesamtheit (25) zu bilden, und ein Modelingmodul (24) von der Dynamik des Satelliten umfaßt, von dem ein Eingang wenigstens indirekt mit Detektoren verbunden ist, wobei ein zwischenliegender Auswähler (28), der mit ersten und zweiten Auswählern (27, 29) verbunden ist, welche für jeden Satellitenmodus bestimmt sind, um das Steuerungs- und Korrekturmodul der Verarbeitungslinie zu verbinden, die diesem Modus an dem Ausgang höchstens eines dieser Elemente zugeordnet ist.

7. System nach einem der Ansprüche 1 bis 6, dadurch gekennzeichnet, daß die Vielzahl von Detektoren Sonnendetektoren ($S_1$ bis $S_3$) umfaßt und die Verarbeitungsketten mit dieser Vielzahl von Detektoren verbunden sind, um so die Schlingerbewegung zugleich durch terrestrische und Sterndetektoren, die Nick-schwingung zugleich durch terrestrische und Sonnendetektoren und das Gieren zugleich durch die Sonnen- und Sterndetektoren messen zu können.

## Claims

1. Attitude control system for a geostationary satellite stabilized about an east-west axis, a north-south axis and a geocentric axis, these axes being perpendicular to one another, comprising a plurality of detectors ($T_1$, $S_1$, $S_2$, $S_3$, and P) including at least one terrestrial detector ($T_1$) intended to be oriented towards the earth and a stellar detector oriented towards the north along the north-south axis, and a plurality of actuators, characterized in that it comprises:

   - a processing system (14 + 18; 15 + 19; 16 + 20) for each at least of the normal modes (I) and the station-keeping mode (II), each processing system being adapted to be connected to the detectors on the one hand, and to at least some of the actuators (11, 12, 13) on the other hand, and comprising a pre-processing module (14-16) adapted to determine for each axis, designated by the respective subscript $\underline{i}$, an angular offset $\varepsilon_i$ relative to this axis $\underline{i}$ between a measured angle determined from the signals emanating from the plurality of detectors and a predetermined reference angle, as well as a control and correction module (18, 20) adapted to determine for each axis marked by its respective subscript $\underline{i}$ a corrective torque of the form:
   $$C = k_i.\varepsilon_i + h_i.\overset{\circ}{\varepsilon}_i$$
   where $k_i$ and $h_i$ are parameters specific to each axis and to each processing line and where $\overset{\circ}{\varepsilon}$ is the rate of variation of this angular offset,
   - a speed measuring unit (24,25) adapted to measure the angular speed $\overset{\circ}{\varepsilon}_i$ and to be connected to at least the control and correction module (19) of the station-keeping mode processing system (II),
   - and a mode selection unit (26) adapted to control an input selector (27) connecting the detectors to a selected processing line, and an output selector (29) adapted to connect that processing line to at least one actuator.

2. System according to Claim 1, characterized in that the angular offset $\varepsilon_z$ about the Z axis, called the yaw offset, is measured by establishing the difference between the measurement $\underline{x}$ from the stellar detector (P) in the plane of the X and Y axes and a value $\underline{x}_o$ representing the predicted position of the pole star in the field of view of the stellar detector assuming that the attitude of the satellite is perfect:
$$\varepsilon_z = X - X_o$$

3. System according to Claim 2, characterized in that the angular offsets $\varepsilon_x$ and $\varepsilon_y$ associated with the X and Y axes are taken as equal to the measurements from the terrestrial detector ($T_1$).

4. System acording to any one of Claims 1 to 3, characterized in that the plurality of detectors comprises solar detectors ($S_1$-$S_3$) and a processing line (IV) is associated with the satellite survival mode, adapted to be connected to the terrestrial, solar and stellar detectors.

5. System according to any one of Claims 1 to 4, characterized in that a processing line (III) is associated with the station-keeping mode, connected to at least the terrestrial and stellar detectors and comprising a control and correction module (20) adapted to determine correction torques according to the formula:
$$C^{III}_i = k^{III}_i.\varepsilon_i + h^{III}_i.\overset{\circ}{\varepsilon}_i$$

6. System according to any one of Claims 1 to 5, characterized in that it comprises two speed measuring units, namely a set of gyrometers (25) and a module (24) modelling the dynamics of the satellite, of which one input is connected at least indirectly to the detectors, an intermediate selector (28) connected to the first and second selectors (27, 29) being adapted for each mode of the satellite to connect the control and correction module of the processing line associated with that mode to the output of at most one of these units.

7. System according to any one of Claims 1 to 6, characterized in that the plurality of detectors includes solar detectors ($S_1$ to $S_3$), and the processing systems are connected to this plurality of detectors in such a way as to be able to measure roll by means of the terrestrial and stellar detectors simultaneously, pitch by means of the terrestrial and solar detectors simultaneously and yaw by means of the solar and stellar detectors simultaneously.

FIG.1

FIG.2

FIG. 3

FIG. 4